# EUROPEAN PATENT SPECIFICATION

(11) **EP 1 545 187 B1**
(45) Date of publication and mention of the grant of the patent: **04.08.2010**
(21) Application number: 03784223.4
(22) Date of filing: 12.08.2003
(51) Int. Cl.: A01G 13/02, C09K 17/52

(54) **BIODEGRADABLE FIBROUS SUPPORT FOR SOIL MULCHING**
BIOLOGISCH ABBAUBARER FASRIGER TRÄGER FÜR ERDMULCH
SUPPORT FIBREUX BIODEGRADABLE POUR PAILLAGE DU SOL

(30) Priority: 13.08.2002 FR 0210258
(43) Date of publication of application: 29.06.2005
(73) Proprietor: Ahlstrom Research and Services, 38780 Pont Evêque (FR); Ahlstrom Corporation, 00180 Helsinki (FI)
(72) Inventor: GIRARD, Pierrick, 38170 Seyssinet-Pariset (FR); DUSSAUD, Joseph, F-38780 Pont Evêque (FR); VREVIN, Laurence, F-38200 Vienne (FR); KRALLMAN, Volker, 57602 Altenkirchen (DE)
(74) Representative: HOFFMANN EITLE
(86) International application number: PCT/FI2003/000599
(87) International publication number: WO 2004/014122

(56) References cited:
- EP-A1- 1 111 114
- CA-A1- 2 223 353
- DE-A1- 3 816 865
- DE-A1- 19 504 166
- FR-A1- 2 630 293
- FR-A1- 2 813 888
- US-A- 2 961 799
- US-A- 5 786 281
- DATABASE EPODOC EUROPEAN PATENT OFFICE, THE HAGUE, NL; 30 April 1998 (1998-04-30), XP002241439 & SI 9 600 317 A2 (JENKO ANTON MAG DIPL ING) 30 April 1998
- PATENT ABSTRACTS OF JAPAN vol. 018, no. 296 (C-1209), 6 June 1994 (1994-06-06) & JP 06 062680 A (TOMOEGAWA PAPER CO LTD), 8 March 1994 (1994-03-08)

## Description

The invention relates to a biodegradable fibrous support for soil mulching, which can be used especially in the field 6f horticulture, market gardening, landscaping (tree nursery, green spaces).

In the rest of the description, the expression "fibrous support" denotes a support based on coniferous or deciduous unbleached or bleached plant fibres, or fibres of annual plants such as cotton, ramie, jute, flax, hemp etc. or synthetic fibres such as e.g. viscose, these fibres being biodegradable and they can be used by themselves or as a mixture, said support being furthermore able to comprise additives, in a manner that is not exhaustive, such as carbon black, hydrophobic resins (epichlorhydrin, polyamide etc.), fungicide, fungistatic and bactericidal agents, the mass of the support being between 40 g/m² and 200 g/m². advantageously 150 g/m².

The materials for mulching of the soil have to solve a certain number of the following objectives: prevent the weeds from growing shoots, maintain the structure of the soil, control the variations of the climate (moisture, temperature), assure a regular production both quantitatively and qualitatively, and make possible their mechanical application on the ground.

Several types of soil mulching materials are nowadays proposed, among which the plastic films and papers/nonwovens can be distinguished.

Firstly, black plastic sheeting is known, which has the advantage of being solid, despite its low weight per unit area, and thus being weather-resistant. However, this plastic sheeting has a certain number of drawbacks, especially that of not being biodegradable, its lifetime being in the order of 450 - 600 years. For obvious environmental reasons, plastic cannot be buried in the soil. Consequently, when the harvesting has been completed and the grower wishes to plough his land, he must completely remove the plastic. The cost of this operation is estimated to be 20% of the total cost of the mulching.

Moreover, since the plastic heats up very quickly when exposed to solar rays, the leaves of the plant close to the ground adhere and then burn having as consequences, firstly, the decrease of the productivity because of delayed growth and, secondly, they can only be removed with removal of this film. It is estimated that the removal of one ton of plastic entails the removal of one ton of plants and earth that have remained attached to the said plastic. Consequently, the plastic is virtually unrecyclable, the cost of washing it being unacceptably high for such an operation.

To solve the problem related to biodegradability, attempts have been made to manufacture films based on biodegradable materials, such as polymers of polylactic acid (PLA). In this sense, the document FR-A-2 733 520 describes association of a net or a "spunbund" of PLA with a film based on BAPE (biodegradable aliphatic polymer), i.e. a material from fossil resources (oil or gas) by heat sealing. However, this type of product has the inconvenience of being expensive to produce. Moreover, and above all, the fossil resources last for a limited period and, at least as far as oil is concerned, its reserve is estimated to last about forty years (source BP) in 2000. Accordingly, the use of these materials for mulching of the soil is eventually compromised.

The document EP-A-637 641 describes, still concerning mulching, a non-woven composed of filaments produced entirely of a polymer or a polymer mixture derived from lactic acid. One of the main disadvantages of this kind of a product is its cost.

The mulching papers have inverse properties i.e. their degradability is fast, but on the other hand, their mechanical characteristics, especially their tearing strength, are low compared with plastics. To solve this problem, the document FR-A-2 016 071 describes mulching papers treated with urea-formaldehyde resins. However, despite this treatment, the paper can break due to the effect of the watering phases, which expand the paper, and of the drying phases which retighten the paper.

The document WO 01/25536 of the Applicant describes a mulching paper comprising a resin based on epichlorhydrin, the paper being degraded by spraying an enzymatic solution capable of destroying both the resin and the cellulose. However, the described papers are adapted to short growing periods e.g. of the lettuce type. In particular, the mentioned paper based on deciduous fibres (20 %), coniferous fibres (50 %) and epichlorhydrin resin (3 %), sold by the Applicant under the trademark SEQUANA^{®}, has a satisfactory strength during 3 - 4 months only, thus preventing its use for longer growing periods of e.g. 4 - 5 months with regard to melons, 9 months for the strawberries, 2 - 4 years in the field of tree nursery and green spaces.

The document JP2222421 describes a biodegradable mulching paper composed of a support based on plant fibres coated with an emulsion comprising as main constituent a copolymer of polyhydroxybutyrate acid (PHB) and polyhydroxyvalerianic acid (PHV) as a mixture with a natural polymer of starch and cellulose type and a synthetic polymer such as polylactic acid. No information is given regarding lifetime of this kind of a support. And once again we are confronted with the problem related to cost reasons.

The document DE-A-38 16865 describes a mulching paper reinforced in its centre with a plastic grid, especially in polypropylene and thus not biodegradable.

The document SI 9 600 317 A describes a mulching paper reinforced with a grid formed of annular plant fibres such as jute and coconut. The inconvenience of these fibres is that they degrade very rapidly and are thus incompatible with good resistance of bad weather.

In other words, the problem that the invention aims to solve is that of developing a mulching support based on plant fibres, which would be inexpensive, resistant during the relatively long-term growing, in practice in the order of 1 - 36 months and 100 % biodegradable within a time limit as short as possible after said growing has ended and at a low cost.

To do this, the invention proposes a biodegradable fibrous support for mulching of the soil, the support being provided with a reinforcing means in the form of a grid, characterized in that the grid is produced of a biodegradable polymer chosen from the group comprising polylactic acid, polycaprolactone, viscose, modified viscose, polyhydroxybutyrate and polyhydroxyalcanoate, by themselves or as a mixture, the grid being either maintained on the whole or part of at least one support face, or incorporated into the whole or part of the mass of the support.

In other words, the invention consists in associating a grid, produced of biodegradable material, glued or incorporated to the surface of the fibrous support, which allows to reinforce the mechanical strength of the support during the whole growing period, yet without delaying the degradation process of the plant fibres, which is faster than that of the material making up the grid.

In the rest of the description and in the claims, the expression "grid" denotes a grid formed by a network of crossed non-woven threads comprising at least two webs of warp and weft threads, these warp and weft threads being interconnected at their crossings by a bonding agent creating a series of gluing points. This type of a grid and its manufacturing process are described e.g. in the document EP-A-1 111 114.

In the invention, the grid is original in that it is produced of biodegradable polymers i.e. of fibres made of cellulose. In practice, the polymers are chosen from the group comprising polylactic acid, polycaprolactone, viscose, modified viscose such as of the LYOCELL or MODAL type, polyhydroxybutyrate and polyhydroxyalcanoate, by themselves or as a mixture. In an advantageous embodiment, the grid is produced exclusively of modified viscose threads and corresponds e.g. to the grid sold by CHAVANOZ INDUSTRIE under the reference 4032/71. According to another embodiment, the grid is produced solely from polylactic acid fibres such as those sold e.g. under the trademark TERRAMAC^{®} by the company UNITIKA.

In practice, the grid has a weight of between 10 and 50 g/m², advantageously in the order of 20 g/m².

According to a first embodiment of the invention, the grid is maintained on the whole surface of the support, at least on one or both of the faces according to preference, the grid being able to be placed facing either the soil or the sky. In this case, the mulching will be more particularly adapted to long growing of several months.

In a more economical second embodiment, the grid is placed exclusively in the area of fixing points of the support in the soil, that is to say in the area of air/ground/substrate interface. The Applicant has in fact noticed that the micro organisms in the soil degraded the support and had an important effect on its strength at the fixing points, making it especially sensitive to the weather, especially to the wind. The fitting of the grid in the area of these fixing points, on one or both of the support faces, thus allows slowing down its biodegradation at the points that are sensitive, yet without affecting this process, which is slower, on the part which is not buried.

In practice, the grid is glued directly against the surface of the finished fibrous support by means of a biodegradable water-resistant glue chosen from the group comprising ethylene polyvinylic alcohol (EVOH) and polyvinylic alcohol (PVA), by themselves or as a mixture. In practice, the glue represents between 5 and 50 %, advantageously 15 %, by weight of the grid.

Moreover and according to another characteristic, the support may be subjected to a lime sludge/ micrite coating step before or after gluing of the grid.

In a third embodiment, the grid is not glued but directly integrated into the mass of the support during the manufacturing process of the latter. Here again, the grid may be arranged over the whole surface of the support or exclusively in the area of the fixing points of the support on the ground. In practice, the grid is unrolled directly on the fibrous support during formation on the wire of the paper or non-woven machine, the grid in the finished product thus being entangled to the surface of the support. Furthermore, with this technique, glue is no longer needed.

Moreover, for mechanically reinforcing the mulching support even more, the said support may further contain thermobonding biodegradable synthetic fibres representing 5 - 50 %, advantageously 10 - 15 %, by weight of the support.

In the rest of the description and in the claims, the expression "thermobonding fibres" denotes short fibres having a size of between 1 and 30 mm, preferably in the order of 5 mm, the average melting point of which is between 60°C and 180°C, these fibres being able to melt during the manufacturing process of the support so as to bind the fibres nearby and to strengthen the mechanical properties of the said support. In practice, the fibres are chosen so that they melt at the temperature, at which the support is manufactured, which is about 100°C if the support is manufactured on a paper machine and about 170°C if the support is manufactured on a non-woven machine.

The thermobonding fibres of the invention may have a unique or double melting point on the assumption that the fibre is in the form of a so-called "bicomponent" fibre, corresponding to a fibre comprising two polymers having distinct physical and/or chemical characteristics, extruded from the same die for forming a single filament. In other words, the fibre in is the form of a core, having a first melting point surrounded by a sheath having a second lower melting point. This is e.g. the case with PLA- fibres sold by UNITIKA under the trademark TERRAMAC^{®}, especially under the reference PL80, the core and sheath melting points of which are equal to 170°C and 130°C, respectively.

Moreover and according to another characteristic, the fibrous support may contain a hydrophobic resin representing 0,5 - 15%, advantageously 6 - 8%, by weight of the support, chosen from the group comprising urea-formaldehyde resins, melamine-formaldehyde resins, polyamide-amine-epichlorhydrin resins, polyethyleneimine resins, starch derivatives, by themselves or as a mixture.

Depending on the colour of the fibres used, the support may further comprise carbon black representing 0,5 - 4% by weight of the support.

In an advantageous embodiment, the fibrous support of the invention can be advantageously coated with an aqueous solution comprising 5 - 50% by weight of biodegradable natural latex obtained from the rubber tree, the balance to 100 % consisting of water, stabilizing and protective agents of latex. The synthesis molecules such as bactericides (such as e.g carbendazine, isothiazoline), fungicides or fungistats (such as e.g. potassium sorbate) can also be incorporated into the coating solution, even if for regulation reasons these substances are to be more and more avoided.

Among the stabilizing agents are especially denoted, but in a non limitative manner, the substances chosen from the group comprising the vegetable proteins such as especially casein, soya protein, the mineral fillers such as talc and calcium carbonate, by themselves or as a mixture.

In the list of preservative agents of latex, i.e. the agents able to avoid the degradation of latex by the micro-organisms, appear especially the substances chosen from the group comprising the animal proteins such as glycerin, but also the tannins, especially that of mimosa, the natural colouring agent indigo, and chitosan, by themselves or as a mixture. For allowing the fixation of tannin on the fibrous support, the coating solution contains metallic salts such as e.g. the aluminium sulphate Al₂(SO₄)₃.

In practice, the stabilizers represent from 1 to 50 % by weight of the coating solution. Also, the preservative agents represent from 1 to 30 % by weight of the coating solution.

According to another characteristic, the coating solution is coated in an amount 10 to 200 g/m² as dry matter of latex, advantageously between 90 and 100 g/m².

In practice, the latex used is obtained from Hevea Brasiliensis and it has a dry rubber concentration at least of 60%. A latex corresponding to this definition is, for example, the one sold under the trademark ALCANTEX^{®} by the company SAFIC-ALCAN.

Instead of standard natural latex, the fibrous support of the invention can be advantageously coated with an aqueous solution comprising 5 - 50% by weight of biodegradable prevulcanized natural latex obtained from the rubber tree. Prevulcanized natural latex is, for example, sold under the trademark REVULTEX MR^{®} by the company SAFIC-ALCAN.

The prevulcanized natural latex can be made biodegradable by utilizing sulphur-eating bacteria, like sulfolobus acidocaldarius, for example by adding the bacteria with the prevulcanized natural latex fibrous support. Besides being biodegradable, the prevulcanized natural latex is easier to handle, for example a lifetime is longer if required.

In a particular embodiment, the coating solution consists, by weight, of:
- from 5 to 50%, advantageously from 15 to 25%, biodegradable natural latex obtained from the rubber tree,
- from 1 to 20%, advantageously from 5 to 10%, vegetable proteins,
- from 0 to 20%, advantageously from 5 to 10%, talc,
- from 0,1 to 1%, advantageously 0,5%, biocide,
- the balance to 100 part consisting of water.

In an advantageous embodiment, the biocides represent from I to 20 % by weight of the solution and are composed of chitosan and/or indigo, and/or glycerin, and/or tannin, by themselves or as a mixture.

When the grid is glued against the surface of the support, the coating of the support by the solution can be carried out before or after the fixing of the grid. In any case, whether the grid is incorporated during the manufacturing process or glued, the coated material obtained can be subjected to a lime sludge/ micrite coating step, that is to say to dry creping.

In other words, the grid, possibly in the presence of thermobonding fibres distributed in the mass of the support and/or to the surface of the natural latex from the rubber tree allows to maintain the mechanical resistance of the support during the whole growing period, yet without affecting the actual degradation process of plant fibres making up the said support. However, this actual degradation process of the support is directly dependent on its composition. In other words, the problem is how to define support compositions according to the desired growing periods.

Consequently and in a first embodiment, the support fibre composition denoted hereinafter "support 1" is as follows:
- from 40 to 100%, advantageously from 70 to 90%, by weight of coniferous unbleached or bleached kraft fibres,
- from 0 to 60%, advantageously from 10 to 30%, of deciduous unbleached or bleached kraft fibres,
- grammage: from 40 to 200 g/m², advantageously from 55 to 75 g/m².

This type of fibrous composition will be especially suitable for short growing periods from about 1 to 6 months.

In a second embodiment, the fibre support composition denoted hereinafter "support 2" is as follows:
- from 80 to 100% by weight of annual plant fibres,
- from 0 to 20%, advantageously from 5 to 15%, by weight of coniferous unbleached or bleached kraft fibres.
- grammage: from 40 to 200 g/m², advantageously from 90 to 100 g/m².

The fibres from annual plants can come from all types of annual plants rich in fibres, which can be used in paper mills and in the filed of non-wovens e.g. of the cotton, ramie, jute, flax, hemp etc. type. In an advantageous embodiment, the fibrous composition contains only fibres that come from annual plants.

This type of composition will be especially suitable for longer growing periods from about 6 to 18 months.

In a third embodiment, the fibre support composition denoted hereinafter "support 3" is as follows:
- from 20 to 100% by weight of coniferous bleached kraft fibres, advantageously from red cedar wood-oil,
- from 0 to 40%, advantageously 20 - 30%, by weight of fibres from annual plants,
- from 0 to 40%, advantageously from 20 to 30%, by weight of rayon or viscose fibres.
- grammage: from 40 to 200 g/m², advantageously 100 g/m².

In practice, the supports are manufactured on a nonwoven machine, and then bound by mechanical and/or hydraulic needling. The support can also be manufactured by a carding process and then bound by mechanical and/or hydraulic needling process.

In an advantageous embodiment of the support 3, the fibrous composition further contains a very small amount of bactericide carbon fibres, that is to say carbon fibres doped with silver, in the order of 0,5 - 2% by weight.

This type of composition will be especially suitable for longer growing periods from about 18 to 36 months.

The invention and the advantages which stem therefrom will become more apparent from the following illustrative examples.

### Example 1

A support with the following composition, by dry weight, was prepared:
- 93% of fibre suspension comprising 100% by weight of coniferous unbleached kraft fibres
- 3% of epichlorhydrin resin
- 4% of carbon black
- grammage: 75 g/m²

A sheet is formed on a paper machine from all constituents of the support. The support obtained this way is creped and then dried. Next, a modified viscose grid sold by CHAVANOZ INDUSTRIE under the reference 4032/71 is glued by means of EVOH-glue, the glue representing 15% by weight with respect to the weight of the grid.

### Example 2

A support with the following composition, by dry weight, was produced:
- 93% of fibre suspension comprising 100% by weight of annual plant fibres (cotton, ramie, jute, flax, hemp)
- 3% of epichlorhydrin resin
- 4% of carbon black
- grammage: 75 g/m²

A sheet is formed on the paper machine from all constituents of the support. A modified viscose grid sold by CHAVANOZ INDUSTRIE under the reference 4032/71 is unrolled on the sheet during the manufacturing process. Finally, the obtained complex is dried.

### Example 3

A support with the following composition, by dry weight, was produced:
- 93% of fibre suspension comprising:
   - 50% by weight of coniferous bleached kraft fibres, red cedar wood-oil
   - 25% by weight of annual plants (cotton, ramie, jute, flax, hemp)
   - 25% by weight of rayon fibres
- 3% of epichlorhydrin resin
- 4% of carbon black
- grammage: 400 g/m²

A sheet in formed on a paper machine from all constituents of the support. The sheet to be formed is subjected to a hydraulic entanglement step known by the name JETLACE. Next, the support is dried and then coated with micrite/dry -creped. Finally, a modified viscose grid sold by CHAVANOZ INDUSTRIE under the reference 4032/71 is glued by means of EVOH-glue, the glue representing 15% by weight with respect to the weight of the grid.

### Example 4

The examples 1 - 3 were repeated by incorporating 20% by weight of PLA-fibres, the average size of which is of 5 mm, sold by UNITIKA under the trademark TERRAMAC^{®} under the reference PL80 to the detriment of the fibre suspension.

### Example 5

Right after the drying steps carried out in the examples 1 - 4, the support is coated with a solution consisting (by weight) of:
- 50% natural latex sold under the trademark ALCANTEX^{®} by the company SAFIC-ALCAN
- 5% proteins,
- 10% talc,
- 1% biocide,
- 34% water.

Finally, the coated support obtained is dried.

## Claims

1. A biodegradable fibrous support for mulching of the soil, the support being provided with a reinforcing means in the form of a grid, **characterized in that** the grid is produced of a biodegradable polymer chosen from the group comprising polylactic acid, polycaprolactone, viscose, modified viscose, polyhydroxybutyrate and polyhydroxyalcanoate, by themselves or as a mixture, the grid being either maintained on the whole or part of at least one support face, or incorporated into the whole or part of the mass of the support.

2. A support according to Claim 1, **characterized in that** the grid is made exclusively of modified viscose threads.

3. A support according to Claim 1, **characterized in that** the weight of the grid is between 10 and 50 g/m², advantageously in the order of 20 g/m².

4. A support according to Claim 1, **characterized in that** the grid is positioned exclusively in the area of the fixing points of the support on the ground.

5. A support according to Claim 1, **characterized in that** the grid is glued directly on the surface of the fibrous support by means of a water-resistant biodegradable glue chosen from the group comprising ethylene polyvinylic alcohol (EVOH) and polyvinylic alcohol (PVA), by themselves or as a mixture, the glue representing between 5 and 50%, advantageously 15 %, by weight of the grid.

6. A support according to Claim 1, **characterized in that** the grid is unrolled directly on the fibrous support during its manufacture.

7. A support according to Claim 1, **characterized in that** it contains thermobonding fibres representing from 5 to 50%, advantageously between 10 and 15%, by weight of the support.

8. A support according to Claim 7, **characterized in that** the thermobonding fibres are composed of PLA-fibres.

9. A support according to Claim 1, **characterized in that** it contains a hydrophobic resin representing from 0,5 to 15% by weight of the support, chosen from the group comprising urea-formaldehyde resins, melamine-formaldehyde resins, polyamide-amine-epichlorhydrin resins, polyethyleneimine resins, starch derivatives, by themselves or as a mixture.

10. A support according to Claim 1, **characterized in that** it contains carbon black representing from 0,5 to 4% by weight of the support.

11. A support according to Claim 1, **characterized in that** it is coated with an aqueous solution comprising from 5 to 50% by weight of biodegradable natural latex obtained from the rubber tree.

12. A support according to Claim 1, **characterized in that** it is coated with an aqueous solution comprising from 5 to 50% by weight of biodegradable prevulcanized natural latex obtained from the rubber tree.

13. A support according to Claim 1, **characterized in that** the stabilizing agents are chosen from the group comprising the vegetable proteins (casein, soya protein), the mineral fillers (talc, calcium carbonate), by themselves or as a mixture.

14. A support according to Claim 12 or 13, **characterized in that** the preservative agents are chosen from the group comprising the animal proteins (glycerin), the tannins, the natural colouring agent indigo, the chitosan, by themselves or as a mixture.

15. A support according to Claim 12 or 13, **characterized in that** the solution is coated in an amount of 10 to 200 g/m², advantageously between 90 and 100 g/m².

16. A support according to Claim 12 or 13, **characterized in that** the natural latex (therefore biodegradable) used is obtained from Hevea Brasiliensis and has a dry rubber concentration at least of 60%.

17. A support according to Claim 1, **characterized in that** the fibre composition of the support is as follows:
- from 40 to 100% by weight of coniferous unbleached or bleached kraft fibres;
- from 0 to 60% by weight of deciduous unbleached or bleached kraft fibres.

18. A support according to Claim 1, **characterized in that** the fibre composition of the support is as follows:
- from 80 to 100% by weight of annual plant fibres,
- from 0 to 20% by weight of coniferous unbleached or bleached kraft fibres.

19. A support according to Claim 1, **characterized in that** the fibre composition of the support is as follows:
- from 20 to 100% by weight of coniferous bleached kraft fibres,
- from 0 to 40% by weight of annual plant fibres,
- from 0 to 40% by weight of rayon fibres.

## Patentansprüche

1. Bioabbaubare faserige Stützschicht zum Mulchen des Bodens, welche Stützschicht mit Verstärkungsmitteln in Form eines Gitters versehen ist, **dadurch gekennzeichnet, dass** das Gitter aus einem bioabbaubaren Polymer hergestellt ist, das aus der Gruppe gewählt wird, die Polymilchsäure, Polycaprolakton, Viskose, modifizierte Viskose, Polyhydroxybutyrat und Polyhydroxyalcanoat allein oder als Mischung umfasst, wobei das Gitter auf der gesamten zumindest einen Stützfläche oder einem Teil davon gehalten ist oder in die gesamte Masse der Stützschicht oder einen Teil davon integriert ist.

2. Stützschicht nach Anspruch 1, **dadurch gekennzeichnet, dass** das Gitter ausschließlich aus Modifizierte-Viskose-Fäden hergestellt ist.

3. Stützschicht nach Anspruch 1, **dadurch gekennzeichnet, dass** das Gewicht des Gitters zwischen 10 und 50 g/m², bevorzugt in der Größenordnung von 20 g/m², ist.

4. Stützschicht nach Anspruch 1, **dadurch gekennzeichnet, dass** das Gitter ausschließlich im Bereich der Fixierpunkte der Stützschicht auf dem Boden positioniert ist.

5. Stützschicht nach Anspruch 1, **dadurch gekennzeichnet, dass** das Gitter direkt auf die Oberfläche der faserigen Stützschicht mittels eines wasserfesten bioabbaubaren Klebstoff geklebt wird, die aus der Gruppe gewählt ist, die Ethylenpolyvinylalkohol, (EVOH) und Polyvinylalkohol (PVA) allein oder als Mischung umfasst, wobei der Klebstoff zwischen 5 und 50 Gewichtsprozent, bevorzugt 15 Gewichtsprozent des Gitters ausmacht.

6. Stützschicht nach Anspruch 1, **dadurch gekennzeichnet, dass** das Gitter während seiner Herstellung direkt auf die faserige Stützschicht ausgerollt wird.

7. Stützschicht nach Anspruch 1, **dadurch gekennzeichnet, dass** sie Thermofusionsfasern enthält, die 5 bis 50 Gewichtsprozent, bevorzugt zwischen 10 und 15 % Gewichtsprozent der Stützschicht ausmachen.

8. Stützschicht nach Anspruch 7, **dadurch gekennzeichnet, dass** sich die Thermofusionsfasern aus PLA-Fasern zusammensetzen.

9. Stützschicht nach Anspruch 1, **dadurch gekennzeichnet, dass** sie ein hydrophobes Harz enthält, das 0,5 bis 15 Gewichtsprozent der Stützschicht ausmacht, das aus der Gruppe gewählt ist, die Harnstofformaldehydharze, Melaminformaldehydharze, Polyamidamin-Epichlorhydrinharze, Polyethyleniminharze, Stärkederivate allein oder als Mischung umfasst.

10. Stützschicht nach Anspruch 1, **dadurch gekennzeichnet, dass** sie Kohlenschwarz enthält, das 0,5 bis 4 Gewichtsprozent der Stützschicht ausmacht.

11. Stützschicht nach Anspruch 1, **dadurch gekennzeichnet, dass** sie mit einer wässrigen Lösung beschichtet ist, die 5 bis 50 Gewichtsprozent bioabbaubaren natürlichen Latex umfasst, der aus dem Gummibaum gewonnen wird.

12. Stützschicht nach Anspruch 1, **dadurch gekennzeichnet, dass** sie mit einer wässrigen Lösung beschichtet ist, die 5 bis 50 Gewichtsprozent bioabbaubaren vorvulkanisierten natürlicher Latex enthält, der aus dem Gummibaum gewonnen wird.

13. Stützschicht nach Anspruch 1, **dadurch gekennzeichnet, dass** die stabilisierenden Mittel aus der Gruppe gewählt sind, die die pflanzliche Proteine, (Kasein, Sojaprotein), die mineralischen Füllstoffe (Talk, Kalziumkarbonat) als solche oder als Mischung umfasst.

14. Stützschicht nach Anspruch 12 oder 13, **dadurch gekennzeichnet, dass** die Konservierungsmittelmittel aus der Gruppe gewählt sind, die die Tierproteine, (Glyzerin), die Tannine, den natürlichen Farbstoff Indigo, das Chitosan allein oder als Mischung umfasst.

15. Stützschicht nach Anspruch 12 oder 13, **dadurch gekennzeichnet, dass** die Lösung vorteilhaft in einer Menge von 10 bis 200 g/m², bevorzugt zwischen 90 und 100 g/m², beschichtet ist.

16. Stützschicht nach Anspruch 12 oder 13, **dadurch gekennzeichnet, dass** der verwendete natürliche Latex (deshalb bioabbaubar) aus Hevea Brasiliensis gewonnen wird und eine Trockengummikonzentration von zumindest 60 % aufweist.

17. Stützschicht nach Anspruch 1, **dadurch gekennzeichnet, dass** die Faserzusammensetzung wie folgt ist:
- 40 bis 100 Gewichtsprozent ungebleichte oder gebleichte Nadelholz-Kraftfasern;
- 0 bis 60 Gewichtsprozent ungebleichte oder gebleichte Laubholz-Kraftfasern

18. Stützschicht nach Anspruch 1, **dadurch gekennzeichnet, dass** die Faserzusammensetzung wie folgt ist:
- 80 bis 100 Gewichtsprozent Einjahrespflanzen-Fasern,
- 0 bis 20 Gewichtsprozent ungebleichte oder gebleichte Nadelholz-Kraftfasern.

19. Stützschicht nach Anspruch 1, **dadurch gekennzeichnet, dass** die Faserzusammensetzung wie folgt ist:
- 20 bis 200 Gewichtsprozent gebleichte Nadelholz-Kraftfasern,
- 0 bis 40 Gewichtsprozent Einjahrespflanzen-Fasern,
- 0 bis 40 Gewichtsprozent Rayonfasern.

## Revendications

1. Support fibreux biodégradable pour paillage de sol, le support étant muni d'un moyen de renfort sous forme de grille, **caractérisé en ce que** la grille est réalisée à partir de polymères biodégradables choisis dans le groupe comprenant l'acide polylactique, le polycaprolactone, la viscose, la viscose modifiée, le polyhydroxybutyrate et le polyhydroxyalcanoate, seule ou en mélange, la grille étant soit maintenue sur toute ou partie d'au moins une face du support, soit incorporée dans toute ou partie de la masse du support.

2. Support selon la revendication 1, **caractérisé en ce que** la grille est réalisée exclusivement en fils de viscose modifiée.

3. Support selon la revendication 1, **caractérisé en ce que** le poids de la grille est compris entre 10 et 50 g/m2, avantageusement de l'ordre de 20 g/m2.

4. Support selon la revendication 1, **caractérisé en ce que** la grille est positionnée exclusivement au niveau des points d'ancrage du support dans le sol.

5. Support selon la revendication 1, **caractérisé en ce que** la grille est contrecollée directement sur la surface du support fibreux au moyen d'une colle biodégradable résistante à l'eau choisie dans le groupe comprenant l'éthylène alcool polyvinylique (EVOH) et l'alcool polyvinylique (PVA), seuls ou en mélange, la colle représentant entre 5 et 50% , avantageusement 15% en poids de la grille.

6. Support selon la revendication 1, **caractérisé en ce que** la grille est déroulée directement sur le support fibreux lors de sa fabrication.

7. Support selon la revendication 1, **caractérisé en ce qu'**il contient des fibres thermoliantes entre 5 et 50 %, avantageusement entre 10 à 15 %, en poids du support.

8. Support selon la revendication 7, **caractérisé en ce que** les fibres thermoliantes sont composées des fibres PLA.

9. Support selon la revendication 1, **caractérisé en ce qu'**il contient une résine hydrophobe représentant de 0.5 à 15% en poids du support, choisie dans le groupe comprenant les résines urée-formaldéhydes, les résines mélamine-formaldéhydes, les résines polyamide-amine-épichlorhydrines, les résines polyéthylène-imines, les dérivés de l'amidon, seuls ou en mélange.

10. Support selon la revendication 1, **caractérisé en ce qu'**il contient du noir de carbone représentant de 0,5 à 4% en poids du support.

11. Support selon la revendication 1, **caractérisé en ce qu'**il est enduit d'une solution aqueuse comprenant de 5 à 50% en poids de latex naturel biodégradable obtenu à partir de l'hévéa.

12. Support selon la revendication 1, **caractérisé en ce qu'**il est enduit d'une solution aqueuse comprenant de 5 à 50% en poids de latex naturel prévulcanisé biodégradable obtenu à partir de l'hévéa.

13. Support selon la revendication 1, **caractérisé en ce que** les agents stabilisants sont choisis dans le groupe comprenant les protéines végétales (caséine, protéine de soja), les charges minérales (talc, carbonate de calcium), seuls ou en mélange.

14. Support selon la revendication 12 ou 13, **caractérisé en ce que** les agents de conservation sont choisis dans le groupe comprenant les protéines animales (glycérine), les tannins, le colorant naturel indigo, le chitosane, seuls ou en mélange.

15. Support selon la revendication 12 ou 13, **caractérisé en ce que** la solution est enduit à raison de 10 à 200 g/m2, avantageusement entre 90 et 100g/m2.

16. Support selon la revendication 12 ou 13, **caractérisé en ce que** le latex naturel (ainsi biodégradable) utilisé est obtenu à partir de Havea Brasiliensis et possède concentration sec de latex au moins 60 %.

17. Support selon la revendication 1, **caractérisé en ce que** la composition en fibres du support est la suivante :
- de 40 à 100 % en poids de fibres de résineux kraft écrues ou blanchies ;
- de 0 à 60 % en poids de fibres de feuillus kraft écrues ou blanchies.

18. Support selon la revendication 1, **caractérisé en ce que** la composition en fibres du support est la suivante :
• de 80 à 100 % en poids de fibres de plantes annuelles,
• de 0 à 20 % en poids de fibres de résineux kraft écrues ou blanchies.

19. Support selon la revendication 1, **caractérisé en ce que** la composition en fibres du support est la suivante :
• de 20 à 100 % en poids de fibres de résineux kraft blanchies,
• de 0 à 40 % en poids de fibres de plantes annuelles,
• de 0 à 40% en poids de fibres de rayonne.
